# EUROPEAN PATENT APPLICATION

(11) **EP 0 967 235 A1**
(43) Date of publication of application: **29.12.1999**
(21) Application number: 99401536.0
(22) Date of filing: 21.06.1999
(51) Int. Cl.: C08G 63/695, C08G 63/91, C09D 167/00

(54) **Silicon-modified resins based on recurring units derived from allyl alcohol and their use in weather-resistant coatings**

(30) Priority: 22.06.1998 US 90241 P; 23.06.1998 US 90420 P
(71) Applicant: Cook Composites and Polymers Company, North Kansas City, MO 64116 (US)
(72) Inventor: Smyth, Scott E., Riverton, NJ 08077 (US)
(74) Representative: Chaillot, Geneviève

(57) **Abstract**

This invention discloses a process for making silicon-modified alkyd resins, resin compositions and products made thereby. This process comprises reacting :
A) at least one organosilicon compound
B) at least one resin obtainable by reacting at least one fatty acid agent with at least one polyhydric polymer having an average OH functionality of about 2 to 25 and Mn from about 800 to about 5000 comprising recurring units derived from an allyl alcohol of formula :

   CH₂=CR³-CH₂-(A)ₙ-OH (III)

   with
   R³ : H or C₁-C₅ alkyl
   A : oxyalkylene group
   n : 0-10

Silicon-modified alkyd resins prepared by this process present significantly improved weatherability in corresponding coating composition applications.

## Description

This invention pertains to the field of processes for making silicon-modified alkyd resins and resin compositions and products made thereby.

Alkyd-type resins are widely used in such varied applications as enamels, lacquers, textile finishes, metal primers, caulking compounds, slushing mixtures, protective coatings and films, leather coatings and water emulsion paints. They are suitable as resins for outdoor paints due to their good adhesion to various substrates, high gloss and reasonable cost. One of the drawbacks in using alkyd resin-based paints in outdoor environments is their lack of weathering resistance, including low resistance to degradation by hydrolysis and ultraviolet radiation (UV).

One approach that has been used to improve weathering resistance is to react the alkyd resin with an organosilicon compound to make a silicon-modified alkyd resin having improved weathering resistance. That approach requires an additional step and that step generally requires substantial processing time, adding substantially to the overall cost of the coating formulation. At the same time, the exterior durability of coatings based on silicon-modified resins has been less than that obtained with certain other coating compositions, such as two-component urethane finishes. Substantial amounts of expensive light stabilizers and/or UV absorbers have also still generally been required to attain sufficient resistance to degradation by UV light exposure and there is a desire for silicon-modified alkyd resins having a higher glass transition temperature to avoid softening at elevated temperatures, so that they would be more resistant to abrasion and imbedding of dirt on the surface at such elevated temperatures. These and other weaknesses in the prior art are addressed by the present invention.

One aspect of the present invention is a process for making a silicon-modified resin comprising reacting :
A) at least one organosilicon compound comprising :
   a) at least one monomeric compound of formula (I)

      (R¹)ₐ Si(OR²)₄₋ₐ (I)

      wherein
      - a =: 1 to 3 and more preferably 1 or 2
      - R¹ =: substituted or unsubstituted hydrocarbyl monovalent group
      - R² =: hydrogen atom or substituted or unsubstituted hydrocarbyl monovalent group
      with R¹, R² substituents selected to be the same or different and
      when a = 2 or 3, R¹ substituents being selected to be the same or different, and
      when a = 1, R² substituents being selected to be the same or different
      and/or
   b) at least one oligomeric or polymeric compound derived from at least one : R¹-monosubstituted trihydroxy silanol and/or R¹-disubstituted dihydroxy silanol,
      said oligomeric or polymeric compound further containing functional end-groups of formula (II) : 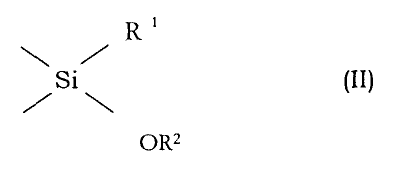 with R¹ and R² defined as in formula (I)
B) at least one resin obtainable by reacting one or more fatty acid agents with at least one polyhydric polymer having an average hydroxyl functionality within the range of about 2 to about 25 and a number average molecular weight in the range from about 800 to about 5,000, which comprises recurring units derived from an allyl alcohol represented by the formula :

   CH₂=CR³-CH₂-(A)ₙ-OH (III)

   wherein R³ is hydrogen atom or a C₁-C₅ alkyl group, A is an oxyalkylene group and "n", which represents the average number of oxyalkylene groups in the allyl alcohol, has a value in the range from 0 to 10.

Another aspect of the present invention is a process for making a silicon-modified resin comprising reacting :
A) at least one polyhydric polymer having an average hydroxyl functionality within the range of about 2 to about 25 and a number average molecular weight in the range from about 300 to about 5,000, which comprises recurring units derived from an allyl alcohol represented by the formula :

   CH₂=CR³-CH₂-(A)ₙ-OH (III)

   wherein R³ is hydrogen atom or a C₁-C₅ alkyl group, A is an oxyalkylene group and "n", which represents the average number of oxyalkylene groups in the allyl alcohol, has a value in the range from 0 to 10 with
B) a mixture comprising one or more fatty acid agents and at least one organosilicon compound comprising :
   a) at least one monomeric compound of formula (I)

      (R¹)ₐ Si(OR²)₄₋ₐ (I)

      wherein
      - a =: 1 to 3 and more preferably 1 or 2
      - R¹ =: substituted or unsubstituted monovalent hydrocarbyl monovalent group
      - R² =: hydrogen atom or substituted or unsubstituted hydrocarbyl monovalent group
      with R¹, R² substituents selected to be the same or different and
      when a = 2 or 3, R¹ substituents being selected to be the same or different, and
      when a = 1, R² substituents being selected to be the same or different
      and/or
   b) at least one oligomeric or polymeric compound derived from at least one : R¹-monosubstituted trihydroxy silanol and/or R¹-disubstituted dihydroxy silanol said oligomeric or polymeric organosilicon compound further containing functional end-groups of formula (II) : 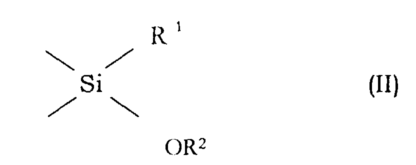 with R¹ and R² defined as in formula (I)

The present invention also includes the polymeric products obtainable with the above processes, modifications of those polymeric products, and use of the modified and unmodified products to make water-based and solvent-based coating formulations. This invention is described in more detail below.

The present invention relates to processes for making a silicon-modified resin and products made by those processes. The process of the present invention comprises reacting (1) at least one organosilicon compound with at least one resin obtainable by reacting one or more fatty acid agents with at least one polyhydric polymer as defined above or (2) a mixture of at least one organosilicon compound and one or more fatty acid agents with at least one polyhydric polymer. The starting materials for these processes are described in more detail below.

Unless specified otherwise, reference to "allyl alcohol" refers to compounds represented by the formula (III). All references to parts, ratios, and percentages in regard to amounts are by weight unless specified otherwise. The term "wt.%" refers to "weight-percent".

### Polyhydric Polymer

The polyhydric polymer is derived from an allyl alcohol of the above described formula (III). The oxyalkylene groups, when present, preferably have from 2 to 6, more preferably from 2 to 4, and even more preferably 3, carbon atoms. Examples include oxyethylene, oxypropylene and oxybutylene.

The oxypropylene groups in the propoxylated allyl alcohols have one or both of the structures -OCH(CH₃)-CH₂- and -OCH₂-CH(CH₃)-, depending on the method of synthesis. Suitable propoxylated allyl alcohols are obtainable by reacting allyl alcohol with up to two equivalents of propylene oxide in the presence of a catalyst. A process for making propoxylated allyl alcohols using a basic catalyst is described, for instance, in US-A-3,268,561 and US-A-4,618,703, the relevant teachings of which are incorporated herein by reference, and also in Swern et al, "Chemistry of Epoxy Compounds", Journal of the American Chemical Society, Vol. 71 (1949), page 1152. A process which uses acid catalyst is described in the same article published in the Journal of the American Chemical Society. Similar processes may be used to make other alkoxylated allyl alcohols as known to those skilled in this field of technology.

The average number of oxyalkylene groups per mole of the alkoxylated allyl alcohol, "n", is in the range from 0 to 10, preferably from 0 to 6, more preferably from 0 to 4 and even more preferably from 0 to 2. In one embodiment, "n" is 0. In another embodiment, "n" is in the range from about 1.4 to about 1.8.

The polyhydric polymer may be made by free-radical polymerization of at least one allyl alcohol, by itself or with other monomers, to produce homopolymers and copolymers of allyl alcohol, respectively. The monomers are combined and heated in the presence of a free radical initiator at a temperature effective to polymerize the monomers. Suitable free-radical initiators include the peroxide and azo-type initiators, the peroxide initiators being preferred. Examples include hydrogen peroxide, benzoyl peroxide, di-tert-butyl peroxide, tert-butyl hydroperoxide, tert-butylperbenzoate, azobis(isobutyronitrile) (AIBN), and the like. Preferably, the initiator is added gradually to the polymerization mixture during the course of polymerization.

Optionally, a solvent is present during polymerization. Suitable solvents are those in which the monomers, free radical initiator, and polymeric reaction products are soluble, such as alcohols, ethers, esters, glycols, glycol ethers, and glycol ether esters.

Specific information on how to make the polyhydric polymers used in the present invention may be found, for example, in US-A-2,894,938; US-A-2,940,946; US-A-5,451,631; US-A-5,543,483, US-A-5,552,486 and US-A-5,638,827, each of which is fully incorporated herein by reference.

Preferred among these polyhydric polymers are those which are copolymers of the allyl alcohol of formula (III) and at least one vinyl aromatic monomer. Suitable vinyl aromatic monomers are aromatic compounds having a -CH=CH₂ group attached to an aromatic ring. Examples include, without limitation, styrene, alkyl-substituted styrenes (e.g., 4-methyl styrene, 4-tert-butyl styrene, 2,6-dimethyl styrene), halogenated styrenes, vinyl naphthalenes, and the like, and mixtures thereof. Monovinyl aromatic monomers are preferred. Styrene and halogenated styrenes are particularly preferred among vinyl aromatic monomers.

Processes for making copolymers of allyl alcohol and vinyl aromatic monomers are well known and taught in US-A-2,894,938 and US-A-2,940,946. In one such process, a mixture of allyl alcohol and vinyl aromatic is heated at a temperature in the range from about 100°C to about 250°C in the presence of from about 0.1 to about 25 wt% peroxide having a decomposition temperature in excess of 90°C, the molar ratio of allyl alcohol to vinyl aromatic monomer being preferably maintained in the range from about 0.2:1 to about 16:1. The molecular weight of the copolymer may be adjusted by adjusting the reaction temperature, higher temperatures favoring lower molecular weight. The hydroxyl functionality of the copolymer can be adjusted by adjusting the molar ratio of allyl alcohol to vinyl aromatic monomer, a higher mole ratio favoring a higher hydroxyl number.

A description specific to how to make copolymers of vinyl aromatic monomer and propoxylated allyl alcohol may be found in US-A-5,451,631 and a description of how to make hydroxyfunctional allyl terpolymers comprising recurring units derived from an allyl ester, propoxylated allylic alcohol, and a vinyl aromatic monomer may be found in US-A-5,543,483.

The polyhydric polymers have an average hydroxyl functionality of at least about 2, more preferably at least about 4, and even more preferably at least about 6, up to about 20, preferably up to about 15, even more preferably up to about 12. In some embodiments, the average hydroxyl functionality is preferably up to about 6. In terms of hydroxyl number, the vinyl aromatic/allyl alcohol copolymers may, for example, have hydroxyl numbers within the range of about 150 mgKOH/g to about 260 mgKOH/g.

The polyhydric polymers have a number average molecular weight of at least about 800, more preferably at least about 1000, up to about 5000. In some embodiments, the molecular weight is preferably up to about 3,500.

The mole ratio of vinyl aromatic monomer to allyl alcohol derived recurring units in the preferred vinyl aromatic/allyl alcohol copolymers is preferably at least about 50:50, more preferably at least about 60:40, up to about 90:10, more preferably up to about 80:20. The copolymers preferably contain not more than 20 mole percent, more preferably not more than 10 mole percent, and even more preferably less than 1 mole percent, units derived from monomers other than vinyl aromatic monomer and allyl alcohol.

In one embodiment, preferred polyhydric polymers are styrene/allyl alcohol copolymers commercially available from Arco Chemical Company under the product designation "SAA", such as SAA-100, which is a copolymer of styrene and an allyl alcohol in which R³ and "n" of formula (III) is a hydrogen atom and "0", respectively. SAA-100 has a styrene to allyl alcohol molar ratio of 70:30, a hydroxyl functionality of about 8 (a hydroxyl number of about 210 mgKOH/g), a number average molecular weight of about 1,500 and a weight average molecular weight of about 3,000.

### Fatty acid agents (Unsaturated Fatty Acids)

Fatty acid agents for making resin (B) or for use in the process for making a silicon-modified resin in which the one or more fatty acid agents are reacted with the at least one polyhydric polymer may be selected from a wide range known to those skilled in the art of making alkyd resins. For the purposes of the present invention, the "fatty acid agent" is a partially unsaturated fatty acid, and may be supplied as an acid or as an oil containing the acid. The reactive fatty acids have at least one unsaturated site. Suitable fatty acids include linoleic acid, linolenic acid, oleic acid, eleostearic acid, and stearic acid. Generally, useful fatty acids will have molecular weights in the range of about 140 to 300.

Fatty acids used in the manufacture of alkyds may be derived from biological oils. Oils commonly used in the manufacture of alkyds include tung oil, oiticica oil, dehydrated castor oil, fish oil, linseed oil, safflower oil, soya oil, tall oil acids, cottonseed oil, and coconut oil. Particularly useful oils are soya oil and tall oil, which consist of mixtures of suitable fatty acids.

Soya oil, for example, contains about 25% oleic, 51% linoleic, and 9% linolenic acids. The remaining 15% soya fatty acids are saturated. Tall oil comprises about 46% oleic, 41% linoleic, and 3% linolenic acids. The remaining 8% tall oil fatty acids are saturated.

Drying oils are described in more detail in "Drying Oils" in Kirk-Othmer Encyclopedia of Chemical Technology, 4^{th} Edition, Vol. 8, pages 519-531 (1993).

When the fatty acid agent is reacted directly with the at least one polyhydric polymer starting material (such as in the mixture with at least one organosilicon compound), the fatty acid is preferably a free fatty acid, as opposed to a drying oil, to facilitate obtaining a homogeneous reaction mixture which, in turn, facilitates contact between the reactants.

Independent of the foregoing, the free fatty acids can also be preferable to drying oils in those instances in which there is a concern about yellowing of the coating composition with age after it is applied. The low cost of drying oils relative to free fatty acids, on the other hand, tends to favor the use of drying oils, particularly those that are naturally occuring.

### Resin (B)

In the first process according to the present invention, at least one resin is reacted with an organosilicon compound to make the silicone-modified resin according to the present invention. That resin is obtainable by reacting one or more of the fatty acid agents with at least one of the polyhydric polymers as described above. The polyhydric polymer is partially esterified with the one or more fatty acid agents, optionally in the presence of substituted or unsubstituted glycerin or another low molecular weight polyol, to produce resin B. This reaction is well known to those skilled in polymer chemistry.

Preferably at least 50 percent, more preferably, at least 90 percent, of the ester linkages in resin (B) link the one or more fatty acid agents to the polyhydric polymer. Resin (B) is prepared so that not all the hydroxyl groups of the polyhydric polymer are reacted with the fatty acid agent, so that sufficient hydroxyl groups remain to react with the organosilicon compound. In one embodiment, the average hydroxyl functionality of resin (B) is preferably at least about 2, more preferably at least about 3, preferably up to about 6, more preferably up to about 5. The desired hydroxyl functionality may be obtained by adjusting the ratio of amounts of fatty acid agent to polyhydric polymer so that there is an excess of equivalents of hydroxyl groups from the polyhydric polymer.

A silicon-modified resin polymer is prepared by reaction of the available hydroxyl groups of resin (B) with silanol and/or alkoxy silane and/or phenoxy silane functional groups from the organosilicon compound (A). The weight percent of resin (B) in the silicon-modified resin polymer is at least 20%, more preferably at least 50% and even more preferably at least 70%.

### Organosilicon Compound

The organosilicon compound may comprise :
a) at least one monomeric compound of formula (I)

   (R¹)ₐ Si(OR²)₄₋ₐ (I)

   wherein
   - a =: 1 to 3 and more preferably 1 or 2
   - R¹ =: substituted or unsubstituted hydrocarbyl monovalent group
   - R² =: hydrogen atom or substituted or unsubstituted hydrocarbyl monovalent group
   with R¹, R² substituents selected to be the same or different and
   when a = 2 or 3, R¹ substituents being selected to be the same or different, and
   when a = 1, R² substituents being selected to be the same or different
   and/or
b) at least one oligomeric or polymeric compound derived from at least one : R¹-monosubstituted trihydroxy silanol and/or R¹-disubstituted dihydroxy silanol said oligomeric or polymeric organosilicon compound further containing functional end-groups of formula (II) : 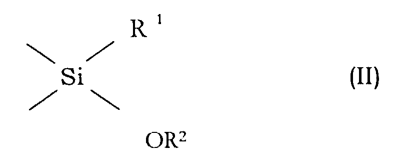 with R¹ and R² defined as in formula (I)

The hydrocarbyl group may be an alkyl group, such as methyl, ethyl, propyl, or butyl group; an alkenyl group, such as a vinyl or allyl group; or an aryl group, such as a phenyl group, or anyone of the above groups having halogen substituents, the hydrocarbon group preferably having from 1 to 6 carbon atoms, more preferably 1 to 4 carbon atoms. As an exemple, R¹ is selected from the group consisting of phenyl, methyl and propyl, R² is an alkyl group having 1 - 4 carbon atoms.

In a preferred embodiment, the organosilicon compound may consist of at least one organosilicon compound of formula (I) :

(R¹)ₐ Si(OR²)₄₋ₐ (I)

wherein
- a =: 1 to 3 and more preferably 1 or 2
- R¹ =: substituted or unsubstituted hydrocarbyl monovalent group
- R² =: hydrogen atom or substituted or unsubstituted hydrocarbyl monovalent group
with R¹, R² substituents selected to be the same or different and
when a = 2 or 3, R¹ substituents being selected to be the same or different, and
when a = 1, R² substituents being selected to be the same or different

In another preferred embodiment, the organosilicon compound may consist of :
a) at least one linear oligomer or polymer of general formula (IV) : 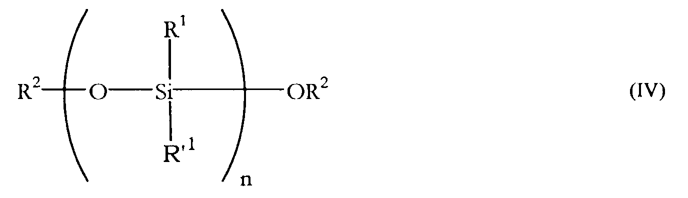 and/or
b) at least one oligomer or polymer of formula (V) : 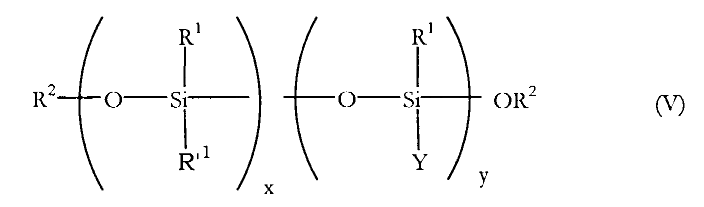 and/or
c) at least one oligomer or polymer of formula (VI) : 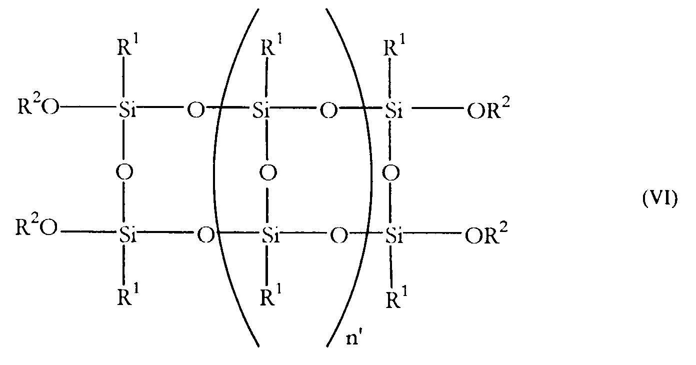 wherein R¹, R² are defined as in formula (I), R'¹ is defined as R¹ but with the possibility that R'¹ and R¹ are the same or different substituents
   - Y =: linear or branched silicone-based graft with at least one end-group of formula (II) with a number of repeating units of less than 4
   with n, n' and x + y selected in such a way that the corresponding number average molecular weight of each organosilicon compound is lower than 3000

Examples of organosilicon compounds suitable for this invention include alkoxy-containing organosilanes, such as diphenyldimethoxy silane, phenylmethyldiethoxysilane, dimethyldiethoxysilane, phenyl triethoxysilane, methyltripropoxysilane, propyltriethoxysilane, vinyl methyldiethoxysilane and 3-chloropropylmethyldimethoxysilane; silanols, such as diphenylsilanediol and diphenylmethylsilanol; organo polysiloxanes having hydroxy and/or alkoxy groups bonded to the silicon atoms prepared by the known method of hydrolysis-condensation of one or a mixture of the hydrolyzible organosilanes selected from the alkoxy-containing organosilanes described above and organohalosilanes; tris(phenylmethylmethoxysiloxy) phenylsilane, 1,5-dimethyl-1,3,5-triphenyl-1,3,5-trimethoxytrisiloxane, 1,5-diphenyl-1,5-dimethyl-3-vinyl-1,3,5-trimethoxytrisiloxane, and linear diorgano polysiloxanes composed of dimethylsiloxane and/or methylphenylsiloxane derived units and terminated at both chain ends with hydroxy or alkoxy groups bonded to the terminal silicon atoms, such as a hydroxy-terminated linear methylphenylpolysiloxane, preferably having from 2 to 6 siloxane units and methoxy-terminated dimethyl polysiloxane preferably having from 2 to 4 siloxane units .

An example of specific organosilicon compound useful for the present invention is Dow Corning Z6018, which is a silicone resin available from Dow Corning. Dow Z6018 is derived from phenyl and propyl di- and trihydroxy silanols reacting by heating in a ratio that produces silicone resin having a phenyl to propyl molar ratio of 2.3:1 and under conditions that result in a molecular weight of about 2,000. The silanols are derived from the corresponding organic chlor-silanes via hydrolysis. The organic chlor-silanes are, in turn, derived by reacting silicon with a phenyl and propyl halides in the presence of copper. Other alkyl and aryl silicone resins can be derived analogously.

### Formulations and Modifications

The silicon-modified resins prepared according to the present invention may be combined with a compatible solvent, which is generally an organic solvent (such as methyl amyl ketone, also known as "MAK"), and a drier to make a solvent-based alkyd resin. The solvent-based alkyd resin may contain one or more additional additives, such as anti-skinning agents, drier activators and silicone.

The silicone-modified resins according to the present invention may also be converted into a water-thinnable resin composition. The term water-thinnable resin composition includes water-based systems like aqueous dispersions or emulsions or water-reducible compositions. One approach for converting the silicon-modified resin into a water-thinnable resin is to produce a silicon-modified resin with sufficient free hydroxyl groups to react with a polybasic carboxylic acid or anhydride to introduce sufficient acid functionality into the silicon-modified resin to react with a basic compound to form ionizable groups. In one embodiment, the acid value of the silicon-modified resin is preferably raised to at least 30, more preferably at least 40, and even more preferably at least 45 mgKOH/g silicon-modified resin, preferably up to 70, more preferably up to 60, and even more preferably up to 55 mgKOH/g silicon-modified resin, by introducing acid functionality and then the acid value is reduced by adding a basic compound, preferably to an acid value less than or equal to 10, more preferably less than or equal to 5 mgKOH/g silicon-modified resin. In one embodiment, such a composition comprises from 20 to 90 weight percent silicon-modified resin according to the present invention, from 80 to 10 weight percent water-miscible organic solvent, and a basic compound in an amount sufficient to reduce the acid value of the silicon-modified resin to below 10.

The term "acid value" as used herein means the number of milligrams of potassium hydroxide necessary to neutralize the acid in one gram of sample as described in ASTM D 1980 and ASTM D 1639.

The polybasic carboxylic acids and anhydrides for making the silicon-modified resins having acid functionality may be selected from among a wide range of compounds. Preferred are those useful in making conventional alkyd resins. Examples include phthalic anhydride, isophthalic acid, terephthalic acid, tetrahydrophthalic anhydride, maleic anhydride, fumaric acid, trimellitic anhydride, succinic acid, adipic acid, sebacic acid, hexahydrophthalic anhydride, and 3,6-methylenetetrahydrophthalic anhydride.

The basic compound is preferably trimethylamine, triethylamine, dipropylamine, dimethylethanolamine, diethylethanolamine, triethanol amine or ammonia, or a mixture thereof.

The water-miscible organic solvent is preferably at least one aliphatic alcohol, glycol, monoalkylether of glycol, or ketone (such as acetone), or mixture thereof.

To the extent that the silicon-modified resin contains free-hydroxyl groups, it may be reacted with polyisocyanate to give a prepolymer, which then reacts with a chain extender or more of the silicon-modified resin to give an alkyd-modified polyurethane (uralkyd) coating.

The silicon-modified resins of this invention may also be crosslinked using a melamine-type crosslinking agent, such as commercial grade hexamethoxymethylmelamine, to give a crosslinked coating. Suitable melamine-type crosslinking agents include, for example, CYMEL™ 303 crosslinking agent, a product of American Cyanamid Company. A minor amount of a melamine-type crosslinking agent may also be used as a comonomer for making resin (B).

The resin, solvent, and any water and basic compound are simply blended together to make coatings useful for outdoor applications. Those formulations may further contain those adjuvents normally used in paint manufacture such as dyes, pigments, etc ..., or they can be used as clear coatings. The coating compositions of this invention may also contain leveling agents, anti-skinning agents (such as EXKIN™ 2, a methylethyl ketoxime available from OMG Corporation), antioxidants, ultraviolet light absorbers and light stabilizers.

Light stabilizers act to diminish the harmful effects of UV radiation on the final cured product and thereby enhance the weatherability, or resistance to cracking, yellowing and delamination of the coating. A surprising feature of this invention is that its stability against ultraviolet light degradation is increased to a greater degree by the presence of light stabilizers than that obtained with the same amount of light stabilizer in conventional alkyd resins, or their silicon-modified counterparts. Conversely, a given degree of stabilization against UV degradation can be achieved with a smaller amount of light stabilizer. To the extent that a light stabilizer is needed and present, light stabilizer is preferably present in an amount of at least about 0.25, more preferably at least about 0.50, wt.%, up to about 3, more preferably up to about 2, and even more preferably up to about 1, wt.%, based on the total weight of solids (i.e., non volatile material) in the coating composition.

Preferred light stabilizers include hindered amines light stabilizers (HALS). Examples of HALS include hydrocarbyl substituted piperidinyl carboxylates in which the carbon atoms adjacent to the nitrogen atom in the piperidinyl ring are substituted with at least one hydrocarbyl group having from 1 to 4 carbon atoms. Bis compounds formed from two such piperidinyl groups and a dicarboxylic acid are particularly preferred. Commercially available, HALS may be obtained from CIBA-GEIGY Corporation, Hawthorne, N.Y., under the trademark TINUVIN® and from CLARIANT Corporation under the trademark SANDUVOR®, such as the series SANDUVOR® 3050 through 3055. Specific examples thereof include bis(1,2,2,6,6-pentamethyl-4-piperidinyl) [3,5-bis(1,1-dimethylethyl-4-hydroxyphenyl)methyl]butylpropanedioate (available from CIBA-GEIGY Corporation as TINUVIN® 144), bis(2,2,6,6-tetramethyl-4-piperidinyl) sebacate (available from CIBA-GEIGY Corporation as TINUVIN® 770), bis(1,2,2,6,6-pentamethyl-4-piperidinyl) sebacate (available from CIBA-GEIGY Corporation as TINUVIN® 292), 4-benzoyloxy-2,2,6,6-tetramethylpiperidine, bis(1-octyloxy-2,2,6,6-tetramethyl-4-piperidyl) sebacate (available from CIBA-GEIGY Corporation as TINUVIN® 123), 1-[2-(3-(3,5-di-t-butyl-4-hydroxyphenyl) propionyloxy)ethyl]-4-{3-(3,5-di-t-butyl-4-hydroxyphenyl)propionyloxy}-2,2,6,6-tetramethylpiperidine, 8-acetyl-3-dodecyl-7,7,9,9-tetramethyl-1,3,8-triazaspiro-[4.5]decane-2,4-dione (available from CIBA-GEIGY Corporation as TINUVIN® 440), 4-(meth)acryloyloxy-2,2,6,6-tetramethylpiperidine, 4-(meth)acryloyloxy-1,2,2,6,6-penta-methyl piperidine, and 3-dodecyl-1-(2,2,6,6-tetramethyl-4-piperidinyl)-2,5-pyrrolidinedione (available from CLARIANT Corporation as SANDUVOR® 3055).

An unexpected advantage in regard to this invention is that coating formulations containing the silicon-modified resins achieve greater stability against UV induced degradation for a given concentration of light stabilizer. This permits greater gloss retention over time for coatings exposed to sunlight or other sources of UV radiation. If greater gloss retention is not a priority, this invention also achieves a minimum required gloss retention with less light stabilizer. In view of the substantial cost of typical light stabilizers, that benefit can result in substantial cost savings for coatings used in outdoor applications.

In one embodiment, a coating containing silicon-modified resin according to the present invention achieves a gloss retention at least 10 percent, more preferably at least 15 percent, and even more preferably at least 20 percent, greater than the gloss retention of a comparative coating when the coating according to the present invention and the comparative coating contain the same light stabilizer in the same amount and are each tested according to ASTM D 4587, Procedure B, in which a BONDRITE™ 1000 panel (available from Q Panel Lab Products, Cleveland, Ohio) is coated with the test sample to an average thickness of 1 mil (0.0254 mm) and exposed to UV for 4 hours at 60°C followed by 4 hours condensation conditions at 50°C using the equipment specified in ASTM G53 containing fluorescent UV bulbs designated 313B, also available from the aforementioned Q Panel Products. The comparative coating contains the same amount of an alkyd resin prepared the same way as the silicon-modified resin, except that one of the above polybasic carboxylic acids or anhydrides useful for imparting acid functionality to the silicon-modified resin, such as phthalic anhydride, is substituted in an equivalent amount for the organosilicon compound. In a preferred embodiment, the present invention achieves the above-specified improvements in gloss retention over the comparative coating that has been silicon-modified to the same degree as the compared silicon-modified resin of the present invention with the same organosilicon compound used to make the compared silicon-modified resin of the present invention.

The preparation of silicon-modified resins and of their formulation into a coating composition according to the present invention are illustrated by the examples which follow. These examples are not to be construed as limiting the scope of the invention, which is defined by the appended claims.

### Specific embodiments

### Examples

### EXAMPLE 1

### Preparation of Resin (B)

To a 2-liter, 4 neck round bottom glass flask, equipped for solvent processing of alkyd resins is charged 345 grams of soybean oil. The soybean oil is heated to 100-120 degrees C at which 402 grams SAA-100 (a styrene allyl alcohol copolymer available from Arco Chemical Company), 23 grams of FASCAT 4201 (dibutyl tin oxide available from Elf Atochem) and 0.23 grams of an antifoam agent are added and permitted to mix with the soybean oil until a homogeneous solution is obtained. The temperature is then increased to 225 degrees C over a 4 hour period and then held at 225 degrees C for one hour before testing for completion of alcoholysis.

### EXAMPLE 2

### Preparation of the silicon-modified resin

When a sample of the reaction mixture of example 1 remains clear at room temperature, the reaction mixture of example 1 is cooled to 150 degrees C and 402 grams of Dow Corning Z6018 available from the Dow Chemical Company and 125 grams methylamylketone are charged to the reactor. The temperature of the reaction mixture is increased to 190 degrees C, which is the reflux temperature for driving water from the reaction mixture. Once a viscosity in the range of Z2 to Z4 at a non volatile material content of 75 wt.% in MAK on the Gardner-Holt viscosity scale (ASTM D 1545 using a Gardner-Holt Bubble Viscometer at 25°C) is reached, the reaction mixture is cooled to 150 degrees C and thinned with 250 grams of methylamylketone to result in a composition having 75 percent non volatile materials comprising the silicon-modified resin according to this invention.

### EXAMPLE 3

### Preparation of a solvent-based coating composition

A solvent-based pigmented coating composition (i.e., a paint) is prepared by grinding 200 g silicon-modified resin prepared in example 2 with 204 g R-902 (a titanium oxide pigment available from DuPont Corporation) until the grind achieves a #7 Hegman particle size and has a wt.% solids of about 160. Then an additional 100 g silicon-modified resin prepared above, 0.816 g of cobalt drier (Catalyst 510 12% cobalt drier from OMG Corporation) and 10.03 g of zirconium drier (Nuxtra 12% zirconium drier from HULS America Corporation) and 4.8 g EXKIN™ 2, a methylethyl ketoxime available from OMG Corporation, are added to the result of the grind and mixed to make a composition having 80 wt.% solids. 125 g MAK may be added to this formulation to reduce the wt.% solids to about 69, resulting in a viscosity of 35 seconds in a #4 Ford Cup, which is suitable for spray application. Spray application results in a coating film that dries to a solid crosslinked coating.

### EXAMPLE 4

### Accelerated Weathering Comparative Data

The coating described in the previous example has been evaluated for durability using an accelerated weathering device. The coating based on the present invention is compared with coatings based on the following benchmark alkyd resins :
- a chain stopped alkyd referenced 11-3132 from CCP
- a conventional silicon modified alkyd referenced 513-3165 from CCP
- a urethane modified alkyd referenced 18-0644 from CCP

The coatings were spray applied on BONDRITE 1000 panels with an average thickness of 1 mil. The panels were allowed to air cure for at least one week and exposure to simulated weather using the QUVweathering device (the test conditions have been previously described above). All coating formulas have been prepared using the formula described in the example 3, the polymer type being the only formulation variable.

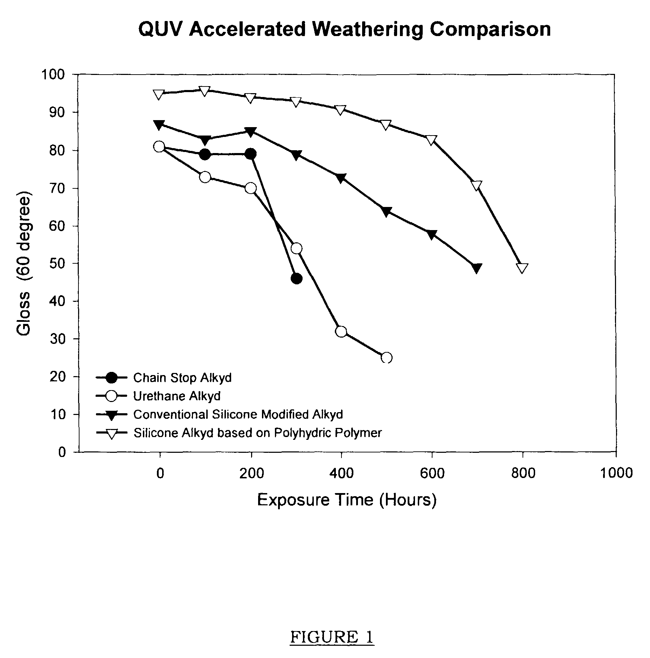

Comparative results are presented in figure 1.

### Preparation of Water Thinnable Silicon Modified Alkyd

### EXAMPLE 5

### Preparation of Resin (B)

To a 4-liter, 4 neck round bottle glass flask, equipped for solvent processing of alkyd resins are charged 345 grams of soybean oil. The soybean oil is heated to 150 degrees C at which 450 grams SAA 100 (a styrene allyl alcohol copolymer available from Arco Chemical Company) are slowly added. Then, 0.45 grams of FASCAT 4201 (dibutyl tin oxide available from Elf Atochem) are added and permitted to mix with the soybean oil until a homogeneous solution is obtained. The temperature is then increased to 210 degrees C over a 2.5 hours period and then held at 210 degree C for 1.5 hour before testing for completion of alcoholysis.

### EXAMPLE 6

### Preparation of the silicon-modified resin

The resin B of example 5 is then cooled to 150 degrees C and 275 grams of Dow Corning Z 6018 available from the Dow Chemical Company and 40 grams of Xylene are charged to the reactor. The temperature of the reaction mixture is increased to 190 degrees C over a 1.5 hour period and then held at 190 degrees C for 3.5 hours. Then 240 grams Proglyde DDM available from Dow Chemicals are added to the resin.

### EXAMPLE 7

### Preparation of the Water thinnable resin

The resin of example 6 is then cooled to 170 degrees C and 125 grams Trimelletic Anhydride are added. The temperature is then held at 170 degree C during 45 mins. Then the Resin is cooled to Room temperature.

### EXAMPLE 8

### Dispersion in Water of the Water thinnable resin

At Room Temperature, 240g of Triethanolamine are added to the resin prepared above. The 2 ingredients are permitted to mix during 10 min. then 950 grams water are added over 15 min.

The final dispersion have the following characteristics :
NVM^{(*)} = 44.7% and pH = 7.86
^{(*)} NVM : Non Volatile Matter obtained after 1hour at 110 degrees C

Although this invention is described in considerable detail by preceding examples and description, this detail is for the purpose of illustration only. Many variations and modifications can be made by one of ordinary skill in the art without departing from the spirit and scope of the invention as it is described in the following claims.

## Claims

1. A process for making a silicon-modified resin comprising reacting :
A) at least one organosilicon compound comprising :
a) at least one monomeric compound of formula (I)
(R¹)ₐ Si(OR²)₄₋ₐ (I)
wherein
a = 1 to 3 and more preferably 1 or 2
R¹ = substituted or unsubstituted hydrocarbyl monovalent group
R² = hydrogen atom or substituted or unsubstituted hydrocarbyl monovalent group
with R¹, R² substituents selected to be the same or different and
when a = 2 or 3, R¹ substituents being selected to be the same or different, and
when a = 1, R² substituents being selected to be the same or different
and/or
b) at least one oligomeric or polymeric compound derived from at least one : R¹-monosubstituted trihydroxy silanol and/or R¹-disubstituted dihydroxy silanol
said oligomeric or polymeric organosilicon compound further containing functional end-groups of formula (II) : 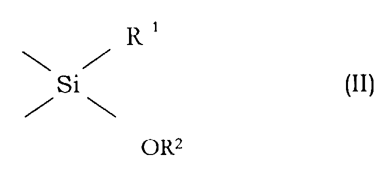 with R¹ and R² defined as in formula (I)
B) at least one resin obtainable by reacting one or more fatty acid agents with at least one polyhydric polymer having an average hydroxyl functionality within the range of about 2 to about 25 and a number average molecular weight in the range from about 800 to about 5,000, which comprises recurring units derived from an allyl alcohol represented by the formula :
CH₂=CR³-CH₂-(A)ₙ-OH (III)
wherein R³ is hydrogen atom or a C₁-C₅ alkyl group, A is an oxyalkylene group and "n", which represents the average number of oxyalkylene groups in the allyl alcohol, has a value in the range from 0 to 10.

2. The process according to claim 1, wherein the one or more fatty acid agents comprise a drying oil.

3. The process according to claim 2, wherein the drying oil is soybean oil.

4. The process according to anyone of claims 1 to 3 wherein at least 50 percent of the ester linkages, in the at least one resin (B), link the one or more fatty acid agents to the at least one polyhydric polymer.

5. The process according to claim 4, wherein the at least 90 percent of the ester linkages, in the at least one resin (B), link the one or more fatty acid agents to the at least one polyhydric polymer.

6. The process according to anyone of claims 1 to 5 wherein the at least one resin (B) in the silicon-modified resin polymer is at least 20% by weight, more preferably at least 50% and even more preferably at least 70%.

7. A process for making a silicon-modified resin comprising reacting :
A) At least one polyhydric polymer having an average hydroxyl functionality within the range of about 2 to about 25 and a number average molecular weight in the range from about 800 to about 5000, which comprises recurring units derived from an allyl alcohol represented by the formula :
CH₂ = CR³ - CH₂-(A)ₙ-OH (III)
wherein R³ is hydrogen atom or a C₁-C₅ alkyl group, A is an oxyalkylene group and "n", which represents the average number of oxyalkylene groups in the allyl alcohol, has a value in the range from 0 to 10, with
B) A mixture comprising one or more fatty acid agents and at least one organosilicon compound comprising :
a) at least one monomeric compound of formula (I)
(R¹)ₐ Si(OR²)₄₋ₐ (I)
wherein
a = 1 to 3 and more preferably 1 or 2
R¹ = substituted or unsubstituted hydrocarbyl monovalent group
R² = hydrogen atom or substituted or unsubstituted hydrocarbyl monovalent group
with R¹, R² substituents selected to be the same or different and
when a = 2 or 3, R¹ substituents being selected to be the same or different, and
when a = 1, R² substituents being selected to be the same or different
and/or
b) at least one oligomeric or polymeric compound derived from at least one : R¹-monosubstituted trihydroxy silanol and/or R¹-disubstituted dihydroxy silanol said oligomeric or polymeric organosilicon compound further containing functional end-groups of formula (II) : 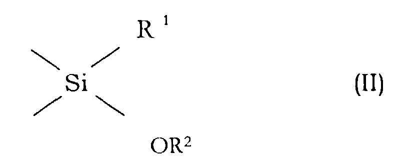 with R¹ and R² defined as in formula (I)

8. The process according to anyone of claims 1 to 7, wherein the at least one polyhydric polymer further comprises recurring units derived from vinyl aromatic monomer.

9. The process according to claim 8 wherein the mole ratio of recurring units derived from vinyl aromatic monomer to recurring units derived from the allyl alcohol represented by formula (III) in the polyhydric polymer is within the range of about 50:50 to about 80:20.

10. The process according to anyone of claims 1 to 9, wherein the at least one polyhydric polymer further comprises recurring units derived from melamine-type crosslinking agents.

11. The process according to anyone of claims 1 to 10 wherein the one or more fatty acid agents comprise linoleic acid.

12. The process according to anyone of claims 1 to 11, wherein the at least one organo-silicon compound consists of at least one monomeric compound of formula (I)
(R¹)ₐ Si(OR²)₄₋ₐ (I)
wherein
a = 1 to 3 and more preferably 1 or 2
R¹ = substituted or unsubstituted hydrocarbyl monovalent group
R² = hydrogen atom or substituted or unsubstituted hydrocarbyl monovalent group
with R¹, R² substituents selected to be the same or different and
when a = 2 or 3, R¹ substituents being selected to be the same or different, and
when a = 1, R² substituents being selected to be the same or different

13. The process according to anyone of claims 1 to 11 wherein the at least one organosilicon compound consists of at least one oligomeric or polymeric compound b) as defined in claim 1 which is selected among oligomers or polymers of general formulas : 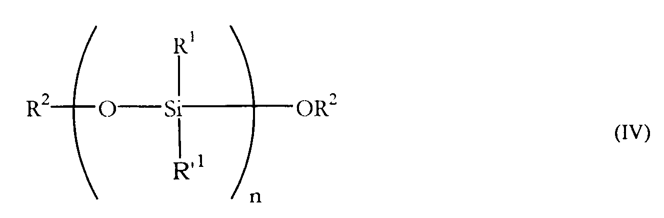 and/or 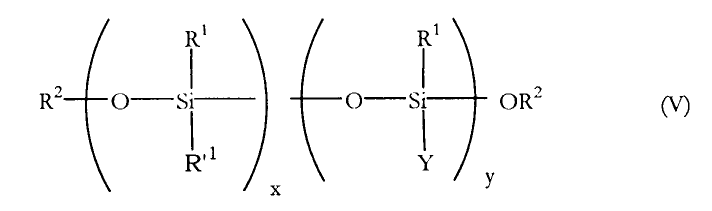 and/or 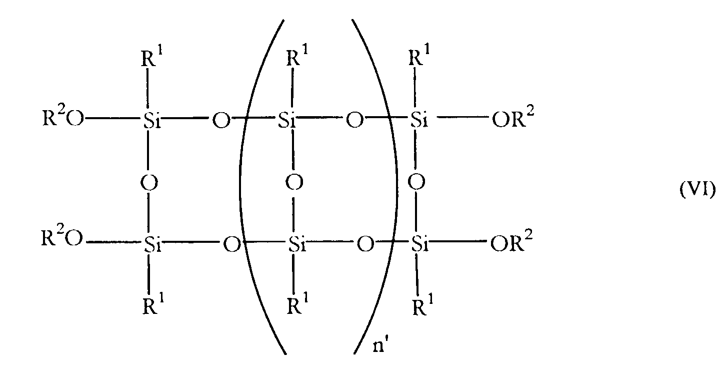 wherein R¹, R² are defined as in formula (I), R'¹ is defined as R¹ but with the possibility that R'¹ and R¹ are the same or different substituents
Y = linear or branched silicone-based graft with at least one end-group of formula (II) with a number of repeating units of less than 4
with n, n' and x + y selected in such a way that the corresponding number average molecular weight of each organosilicon compound is lower than 3000

14. The process according to claim 12 or 13 wherein R¹ is selected from the group consisting of phenyl, methyl and propyl, R² is an alkyl group having 1-4 carbon atoms.

15. A silicon-modified resin obtainable according to the process of anyone of claims 1 to 14.

16. A resin composition comprising the silicon-modified resin of claim 15 and a light stabilizer.

17. The resin composition of claim 16 wherein the light stabilizer is a hindered amine.

18. A resin composition comprising the silicon-modified resin according to anyone of claims 15 to 17 and a compatible solvent.

19. The resin composition according to claim 18 further comprising one or more additives selected from the group consisting of anti-skinning agents, driers, drier activators, and silicone.

20. A water-reducible resin composition comprising :
(a) from 20 to 90 weight-percent silicon-modified resin according to anyone of claims 16 to 18 modified with polybasic carboxylic acid or anhydride to have an acid value in the range from 30 to 70 mg KOH/g silicon-modified resin,
(b) from 80 to 10 weight-percent water-miscible organic solvent, and
(c) a basic compound selected from the group consisting of trimethylamine, triethylamine, dipropylamine, dimethylethanolamine, diethylethanolamine, triethanolamine and ammonia in an amount sufficient to reduce the acid value of component (a) to below 10 mg KOH/g silicon-modified resin.

21. The resin composition according to claim 20 further comprising a drying oil fatty acid.

22. The resin composition according to claim 20 or 21 further comprising a curing agent.

23. An article comprising the resin of claim 15.

24. A process for making a resin-coated article comprising coating an article with the resin composition according to anyone of claims 16 to 22.

25. A resin-coated article obtainable by the process of claim 24.
